# EUROPEAN PATENT SPECIFICATION

(11) **EP 3 709 457 B1**
(45) Date of publication and mention of the grant of the patent: **09.10.2024**
(21) Application number: 19425016.3
(22) Date of filing: 11.03.2019
(51) Int. Cl.: H02B 1/28

(54) **ELECTRICAL PANEL**
ELEKTRISCHE TAFEL
PANNEAU ÉLECTRIQUE

(43) Date of publication of application: 16.09.2020
(73) Proprietor: EIQ INDUSTRIAL S.R.L., 36015 Schio (VI) (IT)
(72) Inventor: Dalla Fontana, Enrico, I-36015 Schio, Vicenza (IT); DI Lelio, Diego, I-36015 Schio, Vicenza (IT)
(74) Representative: Perronace, Andrea

(56) References cited:
- DE-A1- 3 036 498
- US-A1- 2014 367 923
- ANONYMOUS: "Electrical grounding hinge - Powerline | Industrial Connectors", 1 December 2017 (2017-12-01), XP055607756, Retrieved from the Internet <URL:https://ec.staubli.com/AcroFiles/Catalogues/IS_PL-EGH-11013984_(en)_hi.pdf> [retrieved on 20190722]

## Description

### FIELD OF APPLICATION

The present invention relates to an electrical panel. In particular, the present invention relates to an electrical panel suitable for use in particularly hygienic conditions, such as for example in the food industry.

### PRIOR ART

As is known, there are specific regulatory standards for mechanical components to be used in environments where a certain attention to hygiene aspects is required, particularly in the food industry. These standards are also used for electrical panels.

The purpose of these regulations is to make the electrical panel, as well as other components used in the food industry, free of problems from the point of view of hygiene.

One of these problems is the presence of contact surfaces between two metal components, as is known from the document XP055607756, retrieved from the Internet:URL:https://ec.staubli.com/AcroFiles/Catalogues/ IS_PL-EGH-11013984_(en)_hi.pdf. The regulations require that the components exposed to the environment do not have metal-to-metal contact surfaces. In fact, in the interspace between the two surfaces there could be stagnation of material, for example liquid, which could lead to the proliferation of bacteria.

For this reason, the regulations require that between two metal surfaces a sealing gasket be interposed (hereinafter also referred to as a seal only) so that the possibility of material stagnation in the gap is prevented.

The electrical panels of the prior art are therefore provided with a seal positioned between the case and the cover.

A typology of electrical panels for these uses provides for the cover to be hinged to the case, so that, once opened, there is no need to remove and rest the cover before operating inside the compartment of the case in which the electronics is arranged.

For the reasons explained above, relating to hygiene problems and the consequent constraints dictated by the law, the hinges that connect the case and the cover are placed inside the compartment. In this way, not being exposed, they may not be subject to the hygienic constraints mentioned above and in particular to the constraints relating to the metal-metal contact described above.

The prior art, although widely appreciated, is not free from drawbacks.

A first drawback relates to the positioning of the internal hinge or of the internal hinges with respect to the seal between the case and cover.

In fact, in order to ensure correct rotation of the cover, the axis of rotation of the cover must be very close to the outer edge of the case and of the corresponding outer edge of the cover. For this reason, the hinge or hinges, which define the rotation axis, must be positioned very close to the edge of the case and of the corresponding edge of the cover, and therefore very close to the seal.

The risk is that of crushing or "pinching" the seal during rotation.

These problems mean that the seal is always positioned on the cover, a positioning that implies other critical issues.

The cover must therefore be shaped to be able to hold the seal in place. The door is therefore heavy and subject to deformations that could also compromise the seal of the gasket.

Furthermore, if the seal has to be dismantled due to cleaning or replacement issues, the operation is not in itself simple since the cover is in any case a movable element, in rotation, with respect to the case.

A further drawback with respect to the prior art is the space inside the compartment occupied by the hinge or hinges.

In fact, the space occupied is precisely at the opening of the case, making the insertion of an element inside the case complicated, or in any case constituting a space that cannot be used to contain other components.

A further drawback is that the hinge positioned internally, in order to fully open the door, must be of considerable size, bringing the rotation pin to a considerable distance with respect to the cover and consequently is very stressed by the weight of the cover itself. This aspect prevents prior art panels from applying weights, such as electronic components, on the door itself.

### DISCLOSURE OF THE INVENTION

The need of solving the drawbacks and limitations mentioned with reference to the prior art is therefore felt.

Therefore, the need is felt to provide an electrical panel arranged with a hinge which allows maintaining a correct positioning of the gasket between the case and the cover.

Furthermore, the need is felt for an electrical panel in which the internal compartment is more spacious than the electrical panels of the prior art, with the same external bulk.

Furthermore, the need is felt for an electrical panel that is able to solve one or both of the aforementioned requirements, maintaining the electrical panel in compliance with specific regulatory standards for electrical panels that can be used in the food industry.

A further requirement is to provide an electrical panel suitable for hygienic environments with the possibility of loading weights, such as electronic components, on the door.

Such needs are met by an electrical panel according to claim 1.

### DESCRIPTION OF THE DRAWINGS

Further features and advantages of the present invention will appear more clearly from the following description of preferred non-limiting embodiments thereof, in which:
- figure 1 is a schematic perspective view of an electrical panel according to a possible embodiment of the present invention;

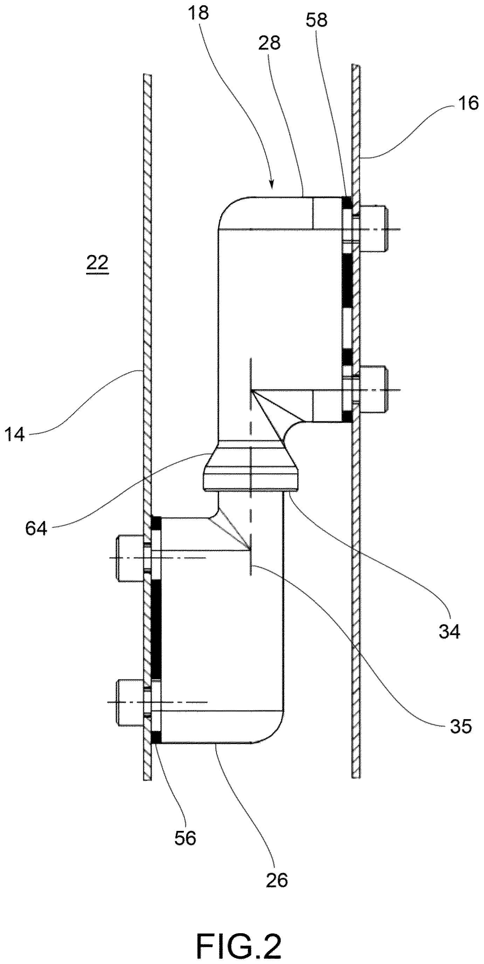

- figure 2 is a schematic view of a portion, in particular a hinge, of an electrical panel according to a possible embodiment of the present invention;
- figure 3 is a schematic exploded view of a hinge of an electrical panel according to a possible embodiment of the present invention;
- figure 4 is a schematic view of a section according to a longitudinal plane of a hinge of an electrical panel according to a possible embodiment of the present invention;
- figure 5 shows an enlargement of a portion of figure 4;
- figure 6 shows a schematic perspective view of a hinge of an electrical panel according to a possible embodiment of the present invention;
- figure 7 shows a schematic transverse section view of a portion of an electrical panel according to a possible embodiment of the present invention.

Elements or parts of elements in common to the embodiments described below are referred to with the same reference numerals.

### DETAILED DESCRIPTION

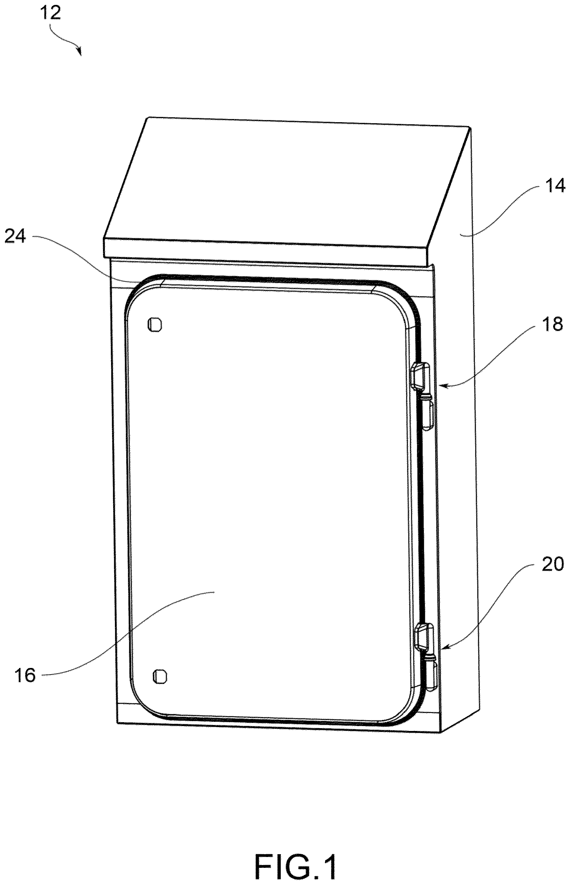

Figure 1 shows an electrical panel according to an embodiment of the present invention and is indicated by the reference numeral 12.

The electrical panel comprises a case 14 and a cover 16, connected together by at least one hinge 18, 20. In the example in figure 1, the hinges 18, 20 are two. However, according to alternative embodiments, the hinges 18, 20 may be even more than two.

The case 14 defines a compartment 22 suitable for being closed by the cover 16, and between the case 14 and the cover 16, a sealing gasket 24 is provided adapted to prevent the fluid connection between the compartment 22 and the outside of the electrical panel 12.

As can be seen in figure 1, the at least one hinge 18, 20 is positioned outside the compartment 22. The at least one hinge 18, 20 comprises a case element 26 and a cover element 28. The case element 26 is connected to the case 14, while the cover element 28 is connected to the cover 16.

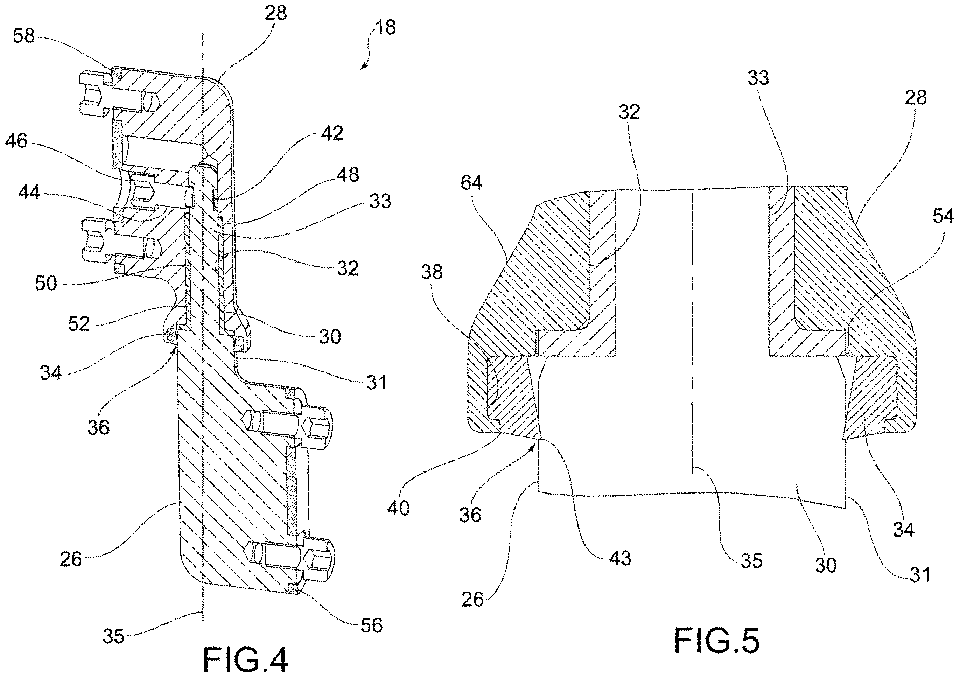

As shown in figure 4, the case element 26 and the cover element 28 are coupled together by a pin 30 inserted in a hole 32.

According to a possible embodiment, which is shown in figure 4, the pin 30 is arranged on the case element 26, while the hole 32 is arranged on the cover element 28. In an alternative embodiment, not shown in the accompanying figures, the pin 30 is arranged on the cover element 28, while the hole 32 is arranged on the case element 26.

The case element 26 and the cover element 28 are therefore suitable for rotating in a relative manner around a hinge axis 35.

Between the pin 30 and hole 32 there is a hinge gasket 34 adapted to prevent the fluid communication between the external environment and the hole 32.

The hole 32 comprises an insertion opening 36 for said pin 30.

According to a possible embodiment of the present invention, a seat 38 for the hinge gasket 34 is arranged at the insertion opening 36.

As can be seen in the embodiment of the example in figure 4, the seat 38 may comprise an undercut 40 suitable for preventing the hinge gasket 34 from slipping off the seat 38 according to the direction of extraction of the pin 30 from the hole 32.

According to a possible embodiment of the present invention, the hinge gasket 34 may be integral in rotation with the seat 38. In this case, the hinge gasket 34 may be mounted with interference in the seat 38.

As shown in figure 5, the hinge gasket 34 may comprise a sealing lip 42 which in use exerts a pressure on the pin 30. In the figure, the hinge gasket 34 has been shown in undeformed conditions, and therefore it overlaps the pin 30. This representation is for descriptive purposes only.

According to a possible embodiment of the present invention, the hinge gasket 34 completely surrounds the pin 30. Essentially, the hinge gasket may have a substantially circular outer footprint and a substantially circular inner footprint.

The hinge gasket 34 may for example be made of silicone suitable for food use. It is also possible to use other materials known per se to those skilled in the art.

The coupling with the fixed part of the hinge is on a circular area and with interference. This interference guarantees the adhesion of the gasket with the two metal surfaces, that of the fixed part and that of the movable part, during rotation but also during the stop. The gasket mounted with interference generates a compressive force on the contact surfaces which guarantees the seal against fluids and in particular the hydraulic seal.

Moreover, the compression of the gasket is uniformly distributed on all the contact surfaces, since the gasket is substantially circular with mounting interference, as shown in the accompanying figures.

The surface of the hinge gasket that is in use is exposed to the environment, has a lying inclined downwards. This inclination avoids possible stagnation of liquids and improves washability, as this surface is the only one exposed to the external environment where the panel is applied.

The gasket between the rotating part and the fixed part may be positioned from top downwards so that it is protected and prevents the stagnation of liquids. In alternative embodiments, the gasket between the rotating part and the fixed part may be mounted from bottom upwards.

According to a possible embodiment of the present invention, the pin 30, having a substantially circular section, may be shaped, and in particular may comprise portions 31, 33 having different diameters.

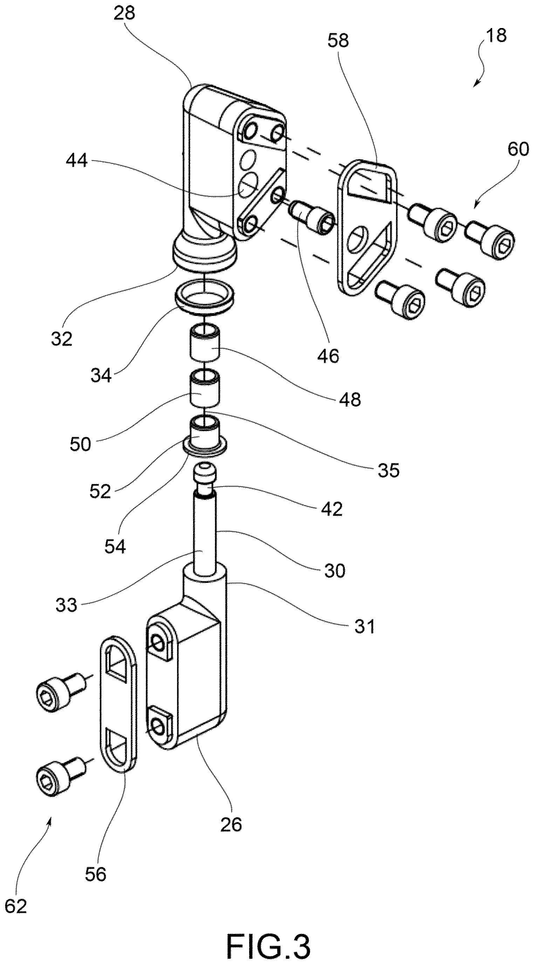

With reference to figures 3 and 4, it can be seen that the pin 30 may comprise a fully inserted portion 33 inside the hole 32, and a larger diameter portion 31 partially inserted inside the hole 32.

According to a possible embodiment of the present invention, at least one bush 48, 50, 52 may be provided between pin 30 and hole 32. In the embodiment shown in the accompanying figures, the bushes 48, 50, 52 are three inserted in the pin 30. Advantageously, one of the bushes has a shoulder 54 suitable for coupling with the larger diameter portion 31 of the pin 30.

According to a possible alternative embodiment, not shown in the accompanying figures, pin 30 and hole 32 may be in direct contact, and therefore without the interposition of bushes.

According to a possible embodiment of the present invention, the pin 30 is provided with an end portion 44 of reduced diameter, and the hole 32 is provided with a transverse threaded seat 44 for a locking screw 46. The locking screw 46, when screwed into the transverse threaded seat 44, is adapted to cooperate with the reduced-diameter end portion 44 to block the longitudinal movement of the pin 30 with respect to the hole 32.

According to a possible embodiment of the present invention, the case 14 and the cover 16 are made of metal, for example stainless steel. For this reason, the hinge 18, 20 has the cover element 28 connected to the cover 16 by the interposition of a first gasket 58, and the case element 26 connected to the case by a second gasket 56.

The connection between the cover element 28 and the cover 16 may be implemented by means of screws 60, for example with four screws. The connection between the case element 26 and the case 14 may be implemented by means of screws 62, for example two screws.

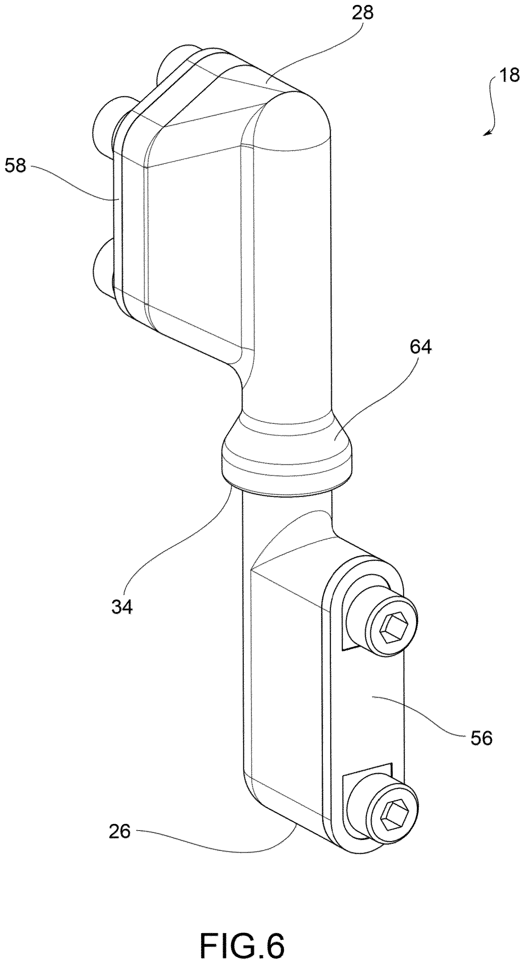

As can be seen in figure 6, according to a possible embodiment of the present invention, the outer surface of the hole 32, near the opening 36 is arranged with a sloping surface 64.

According to a possible embodiment of the present invention, the seal 24 between the case 14 and the cover 16 is arranged on the case.

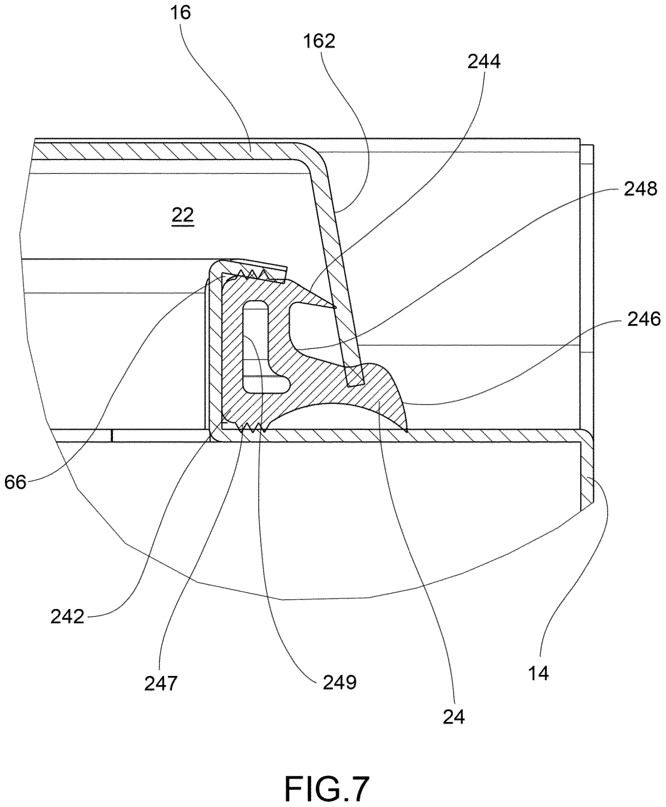

With reference to figure 7, the case 14 may be arranged with a perimeter lane 66, inside which said sealing gasket 24 may be inserted.

According to a possible embodiment of the present invention, the lane 66 may have an open surface for insertion substantially perpendicular to the plane of the case, and facing the outside of the case. In other words, the direction of insertion of the seal inside the lane may be substantially parallel to the front surface of the case. Advantageously, the lane 66 may have a narrower opening than the interior, so that the coupling with the seal 24 takes place with interference.

According to a possible embodiment of the present invention, the sealing gasket 24 may have a body 242, and two sealing lips 244, 246, in which a first sealing lip 244 projects from the body 242 by a smaller extent than the second sealing lip 246.

As shown in the example in figure 7, the cover 16 may have a contour surface 162 inclined with respect to the plane of the cover 16, towards the case 14.

Advantageously, in the closed position of the cover 16, the first sealing lip 244 is coupled with the inner surface of the contour surface of the cover, while the second lip 246 is crushed by the contour surface 162 against the case 14. A protection channel 248 is thus created between the first lip 244 and the second lip 246.

In the embodiment shown in figure 7, the seal 24 is shown in undeformed conditions.

Advantageously, the body 242 may have a through discharge 249. On the outer surface of the body, protrusions 249 may be provided, adapted to improve the adhesion of the seal 24 inside the lane 66.

Advantageously, all the gaskets used may also be certified according to specific standards applicable to electrical panels for electrical aspects.

The advantages that can be achieved with the present invention are now apparent.

In particular, the hinges allow an optimal rotation of the door without risking to crush or "pinch" the gasket during the rotation, guaranteeing an optimal position of the axis of rotation.

Furthermore, the hinges are robust and can be removed for cleaning.

Again, they are safe because they can only be removed from the inside of the compartment by a screw.

Furthermore, the hinges have no contact surfaces between metal and metal, as prescribed by the hygienic guides. They have a rounded geometry that can be sanitized as prescribed by the hygienic guides and do not have flat horizontal surfaces to avoid the stagnation of liquids.

Furthermore, they do not need special equipment for assembly and disassembly.

In addition, they allow adequate rotation of the cover even for applications with coupled panels.

Furthermore, the external positioning of the hinge leaves the compartment and the opening of the panel completely free for the insertion of the internal components.

In particular, the electrical panel with external hinges allows the use of an electrical panel with a gasket positioned on the electrical panel case and not on the cover. This prevents movement during the cover opening and closing steps. However, a quick disassembly of the gasket from the case is allowed for cleaning or replacement operations.

Advantageously, the gasket is positioned inside a seat by means of an undercut that locks the gasket in position, without the use of adhesives.

Moreover, the hollow and unloaded gasket in the lower part is softer than the gaskets of the prior art and guarantees a good seal even if the cover and the case have geometric imperfections.

The cover is light and rigid, and can be made without folds to lock the seal. This simplified geometry facilitates cleaning and prevents dirt from stagnating. A man skilled in the art may make several changes and/or replacements of elements described with equivalent elements to the embodiments described above in order to meet specific needs, without departing from the scope of the appended claims.

## Claims

1. Electrical panel (12) comprising a case (14) and a cover (16); said cover (16) being connected to said case (14) by at least one hinge (18, 20); said case (14) defining a compartment (22) suitable for being closed by said cover (16); between said case (14) and said cover (16) a sealing gasket (24) is provided which is adapted to prevent the fluid connection between the compartment (22) and the outside of the electrical panel (12); wherein said at least one hinge (18, 20) is positioned outside the compartment (22); and in that said at least one hinge (18, 20) comprises a case element (26) and a cover element (28), said case element (26) and said cover element (28) being coupled together by means of a pin (30) inserted in a hole (32), said case element (26) and said cover element (28) being adapted to rotate in a relative manner around a hinge axis (35); **characterised by** a hinge gasket (34) adapted to prevent fluid communication between the external environment and said hole (32) being provided between said pin (30) and said hole (32).

2. Electrical panel (12) according to claim 1, **characterized in that** said case element (26) is arranged with said pin (30) and said cover element (28) is arranged with said hole (32), said hole (32 ) comprising an insertion opening (36) for said pin (30), provided with a seat (38) for said hinge seal (34).

3. Electric panel (12) according to the preceding claim, **characterized in that** said seat (38) comprises an undercut (40) suitable for preventing the extraction of said hinge gasket (34) from said seat (38) according to the direction of extraction of said pin (30) from said hole (32).

4. Electrical panel (12) according to any one of the preceding claims, **characterized in that** the cover element (28) is connected to the cover (16) by the interposition of a first gasket (58), and the case element (26) is connected to the case (14) by means of a second gasket (56) .

5. Electrical panel (12) according to any one of the preceding claims, **characterized in that** said hinge gasket (34) is integral in rotation with said seat (38).

6. Electrical panel (12) according to any one of the preceding claims, **characterized in that** said hinge gasket (34) comprises a sealing lip (42) which in use exerts a pressure on said pin (30).

7. Electrical panel (12) according to any one of the preceding claims, **characterized in that** said hinge gasket (34) completely surrounds said pin (30).

8. Electrical panel (12) according to any one of the preceding claims, **characterized in that** said sealing gasket is made of silicone for food use and suitable for use in electrical panels containing electronic components.

9. Electrical panel (12) according to any one of the preceding claims, **characterized in that** said pin (30) is provided with an end portion (44) of reduced diameter, and said hole (32) is provided with a transverse threaded seat (44 ) for a locking screw (46), said locking screw (46) when screwed into said transverse threaded seat (44), being adapted to cooperate with said end portion (44) of reduced diameter to block the longitudinal movement of said pin (30) with respect to said hole (32).

10. Electrical panel (12) according to any one of the preceding claims, **characterized in that** said case (14) and said cover (16) are made of metal.

11. Electrical panel (12) according to any one of claims 2 to 10, **characterized in that** the outer surface of the hole (32), near the opening (36) is arranged with a sloping surface (64).

12. Electrical panel (12) according to any one of the preceding claims, **characterized in that** the case (14) is arranged with a perimeter lane (66), inside which the sealing gasket (24) is inserted.

13. Electrical panel (12) according to the preceding claim, **characterized in that** the lane (66) has an open surface for insertion substantially perpendicular to the plane of the case (14), and facing the outside of the case (14).

14. Electrical panel (12) according to claim 13, **characterized in that** the seal (24) has a body (242), and two sealing lips (244, 246), wherein a first sealing lip (244) protrudes from the body (242) by a smaller extent than the second sealing lip (244).

15. Electrical panel (12) according to the preceding claim, **characterized in that** the cover (16) has a contour surface (162) inclined with respect to the cover plane (16), towards the case (14), in the closed position of the cover (16), the first sealing lip (244) is adapted to couple with the inner surface of the contour surface (162) of the cover (16), while the second lip (246) is crushed by the contour surface (162) against the case (14); a protection channel (248) is thus created between the first lip (244) and the second lip (246).

16. Electrical panel (12) according to any one of the preceding claims 14-15, **characterized in that** said body (242) has a through discharge (249).

## Patentansprüche

1. Elektrische Tafel (12), umfassend ein Gehäuse (14) und eine Abdeckung (16); wobei die Abdeckung (16) mit dem Gehäuse (14) durch wenigstens ein Scharnier (18, 20) verbunden ist; wobei das Gehäuse (14) eine Aufnahme (22) definiert, welche dazu geeignet ist, von der Abdeckung (16) verschlossen zu sein; wobei zwischen dem Gehäuse (14) und der Abdeckung (16) eine Dichtung (24) bereitgestellt ist, welche dazu eingerichtet ist, die Fluidverbindung zwischen der Aufnahme (22) und der Außenseite der elektrischen Tafel (12) zu verhindern; wobei das wenigstens eine Scharnier (18, 20) außerhalb der Aufnahme (22) positioniert ist; und das wenigstens eine Scharnier (18, 20) ein Gehäuseelement (26) und ein Abdeckungselement (28) umfasst, wobei das Gehäuseelement (26) und das Abdeckungselement (28) miteinander mittels eines Stifts (30) gekoppelt sind, welcher in ein Loch (32) eingesetzt ist, wobei das Gehäuseelement (26) und das Abdeckungselement (28) dazu eingerichtet sind, in einer relativen Weise um eine Scharnierachse (35) zu rotieren;
**gekennzeichnet durch** eine Scharnierdichtung (34), welche dazu eingerichtet ist, eine Fluidkommunikation zwischen der äußeren Umgebung und dem Loch (32) zu verhindern, welche zwischen dem Stift (30) und dem Loch (32) bereitgestellt ist.

2. Elektrische Tafel (12) nach Anspruch 1, **dadurch gekennzeichnet, dass** das Gehäuseelement (26) mit dem Stift (30) eingerichtet ist und das Abdeckungselement (28) mit dem Loch (32) eingerichtet ist, wobei das Loch (32) eine Einsetzöffnung (36) für den Stift (30) umfasst, bereitgestellt mit einem Sitz (38) für die Scharnierdichtung (34).

3. Elektrische Tafel (12) nach dem vorhergehenden Anspruch, **dadurch gekennzeichnet, dass** der Sitz (38) einen Unterschnitt (40) umfasst, welcher dazu geeignet ist, die Entnahme der Scharnierdichtung (34) von dem Sitz (38) gemäß der Richtung der Entnahme des Stifts (30) von dem Loch (32) zu verhindern.

4. Elektrische Tafel (12) nach einem der vorhergehenden Ansprüche, **dadurch gekennzeichnet, dass** das Abdeckungselement (28) mit der Abdeckung (16) durch das Zwischenfügen einer ersten Dichtung (58) verbunden ist und das Gehäuseelement (26) mit dem Gehäuse (14) mittels einer zweiten Dichtung (56) verbunden ist.

5. Elektrische Tafel (12) nach einem der vorhergehenden Ansprüche, **dadurch gekennzeichnet, dass** die Scharnierdichtung (34) integral in Rotation mit dem Sitz (38) ist.

6. Elektrische Tafel (12) nach einem der vorhergehenden Ansprüche, **dadurch gekennzeichnet, dass** die Scharnierdichtung (34) eine Dichtungslippe (42) umfasst, welche bei Verwendung einen Druck auf den Stift (30) ausübt.

7. Elektrische Tafel (12) nach einem der vorhergehenden Ansprüche, **dadurch gekennzeichnet, dass** die Scharnierdichtung (34) den Stift (30) vollständig umgibt.

8. Elektrische Tafel (12) nach einem der vorhergehenden Ansprüche, **dadurch gekennzeichnet, dass** die Dichtung aus Silikon zur Lebensmittel-Verwendung und geeignet zur Verwendung in elektrischen Tafeln ist, welche elektrische Komponenten enthalten.

9. Elektrische Tafel (12) nach einem der vorhergehenden Ansprüche, **dadurch gekennzeichnet, dass** der Stift (30) mit einem Endabschnitt (44) von reduziertem Durchmesser bereitgestellt ist und das Loch (32) mit einem transversalen Gewindesitz (44) für eine Verriegelungsschraube (46) bereitgestellt ist, wobei die Verriegelungsschraube (46), wenn sie in den transversalen Gewindesitz (44) eingeschraubt ist, dazu eingerichtet ist, mit dem Endabschnitt (44) von reduziertem Durchmesser zusammenzuwirken, um die longitudinale Bewegung des Stifts (30) bezüglich des Lochs (32) zu blockieren.

10. Elektrische Tafel (12) nach einem der vorhergehenden Ansprüche, **dadurch gekennzeichnet, dass** das Gehäuse (14) und die Abdeckung (16) aus Metall hergestellt sind.

11. Elektrische Tafel (12) nach einem der Ansprüche 2 bis 10, **dadurch gekennzeichnet, dass** die äußere Fläche des Lochs (32) nahe der Öffnung (36) mit einer abgeschrägten Oberfläche (64) eingerichtet ist.

12. Elektrische Tafel (12) nach einem der vorhergehenden Ansprüche, **dadurch gekennzeichnet, dass** das Gehäuse (14) mit einer Umfangsspur (66) eingerichtet ist, innerhalb welcher die Dichtung (24) eingesetzt ist.

13. Elektrische Tafel (12) nach dem vorhergehenden Anspruch, **dadurch gekennzeichnet, dass** die Spur (66) eine offene Fläche zum im Wesentlichen senkrechten Einsetzen zu der Ebene des Gehäuses (14) aufweist, und zu der Außenseite des Gehäuses (14) weisend.

14. Elektrische Tafel (12) nach Anspruch 13, **dadurch gekennzeichnet, dass** die Dichtung (24) einen Körper (242) und zwei Dichtungslippen (244, 246) aufweist, wobei eine erste Dichtungslippe (244) von dem Körper (242) um einen kleineren Betrag als die zweite Dichtungslippe (244) vorsteht.

15. Elektrische Tafel (12) nach dem vorhergehenden Anspruch, **dadurch gekennzeichnet, dass** die Abdeckung (16) eine Konturenfläche (162) aufweist, welche bezüglich der Abdeckungsebene (16) in Richtung des Gehäuses (14) in der geschlossenen Position der Abdeckung (16) geneigt ist, die erste Dichtungslippe (244) dazu eingerichtet ist, mit der inneren Fläche der Konturenfläche (162) der Abdeckung (16) zu koppeln, während die zweite Lippe (246) von der Konturenfläche (162) gegen das Gehäuse (14) gepresst wird; wobei hierdurch ein Schutzkanal (248) zwischen der ersten Lippe (244) und der zweiten Lippe (246) erzeugt wird.

16. Elektrische Tafel (12) nach einem der vorhergehenden Ansprüche 14-15, **dadurch gekennzeichnet, dass** der Körper (242) einen Durchgangsauslass (249) aufweist.

## Revendications

1. Panneau électrique (12) comprenant un boîtier (14) et un couvercle (16) ; ledit couvercle (16) étant relié audit boîtier (14) par au moins une charnière (18, 20) ; ledit boîtier (14) définissant un compartiment (22) approprié pour être fermé par ledit couvercle (16) ; entre ledit boîtier (14) et ledit couvercle (16), un joint d'étanchéité (24) est prévu qui est adapté pour empêcher la connexion fluidique entre le compartiment (22) et l'extérieur du panneau électrique (12) ;
dans lequel
ladite au moins une charnière (18, 20) est positionnée à l'extérieur du compartiment (22) ; et ladite au moins une charnière (18, 20) comprend un élément de boîtier (26) et un élément de couvercle (28), ledit élément de boîtier (26) et ledit élément de couvercle (28) étant couplés ensemble au moyen d'une goupille (30) insérée dans un trou (32), ledit élément de boîtier (26) et ledit élément de couvercle (28) étant adaptés pour tourner d'une manière relative autour d'un axe de charnière (35) ;
**caractérisé par** un joint de charnière (34) adapté pour empêcher une communication fluidique entre l'environnement externe et ledit trou (32) qui est disposé entre ladite goupille (30) et ledit trou (32).

2. Panneau électrique (12) selon la revendication 1, **caractérisé en ce que** ledit élément de boîtier (26) est agencé avec ladite goupille (30) et ledit élément de couvercle (28) est agencé avec ledit trou (32), ledit trou (32) comprenant une ouverture d'insertion (36) pour ladite goupille (30), pourvue d'un siège (38) pour ledit joint de charnière (34).

3. Panneau électrique (12) selon la revendication précédente, **caractérisé en ce que** ledit siège (38) comprend un dégagement (40) adapté pour empêcher l'extraction dudit joint de charnière (34) depuis ledit siège (38) selon la direction d'extraction de ladite goupille (30) depuis ledit trou (32).

4. Panneau électrique (12) selon l'une quelconque des revendications précédentes, **caractérisé en ce que** l'élément de couvercle (28) est relié au couvercle (16) par l'interposition d'un premier joint (58), et l'élément de boîtier (26) est relié au boîtier (14) au moyen d'un second joint (56).

5. Panneau électrique (12) selon l'une quelconque des revendications précédentes, **caractérisé en ce que** ledit joint de charnière (34) est solidaire en rotation avec ledit siège (38).

6. Panneau électrique (12) selon l'une quelconque des revendications précédentes, **caractérisé en ce que** ledit joint de charnière (34) comprend une lèvre d'étanchéité (42) qui, en utilisation, exerce une pression sur ladite goupille (30).

7. Panneau électrique (12) selon l'une quelconque des revendications précédentes, **caractérisé en ce que** ledit joint de charnière (34) entoure complètement ladite goupille (30).

8. Panneau électrique (12) selon l'une quelconque des revendications précédentes, **caractérisé en ce que** ledit joint d'étanchéité est constitué de silicone à usage alimentaire et appropriée pour une utilisation dans des panneaux électriques contenant des composants électroniques.

9. Panneau électrique (12) selon l'une quelconque des revendications précédentes, **caractérisé en ce que** ladite goupille (30) est pourvue d'une partie d'extrémité (44) de diamètre réduit, et ledit trou (32) est pourvu d'un siège fileté transversal (44) pour une vis de verrouillage (46), ladite vis de verrouillage (46), lorsqu'elle est vissée dans ledit siège fileté transversal (44), étant adaptée pour coopérer avec ladite partie d'extrémité (44) de diamètre réduit pour bloquer le mouvement longitudinal de ladite goupille (30) par rapport audit trou (32).

10. Panneau électrique (12) selon l'une quelconque des revendications précédentes, **caractérisé en ce que** ledit boîtier (14) et ledit couvercle (16) sont constitués de métal.

11. Panneau électrique (12) selon l'une quelconque des revendications 2 à 10, **caractérisé en ce que** la surface extérieure du trou (32), à proximité de l'ouverture (36), est agencée avec une surface en pente (64).

12. Panneau électrique (12) selon l'une quelconque des revendications précédentes, **caractérisé en ce que** le boîtier (14) est agencé avec une voie périmétrique (66), à l'intérieur de laquelle le joint d'étanchéité (24) est inséré.

13. Panneau électrique (12) selon la revendication précédente, **caractérisé en ce que** la voie (66) présente une surface ouverte pour une insertion sensiblement perpendiculaire au plan du boîtier (14), et faisant face à l'extérieur du boîtier (14).

14. Panneau électrique (12) selon la revendication 13, **caractérisé en ce que** le joint (24) présente un corps (242), et deux lèvres d'étanchéité (244, 246), dans lequel une première lèvre d'étanchéité (244) fait saillie depuis le corps (242) dans une moindre mesure que la seconde lèvre d'étanchéité (244).

15. Panneau électrique (12) selon la revendication précédente, **caractérisé en ce que** le couvercle (16) présente une surface de contour (162) inclinée par rapport au plan de couvercle (16), vers le boîtier (14), dans la position fermée du couvercle (16), la première lèvre d'étanchéité (244) est adaptée pour se coupler avec la surface interne de la surface de contour (162) du couvercle (16), tandis que la seconde lèvre (246) est écrasée par la surface de contour (162) contre le boîtier (14) ; un canal de protection (248) est ainsi créé entre la première lèvre (244) et la seconde lèvre (246).

16. Panneau électrique (12) selon l'une quelconque des revendications précédentes 14 et 15, **caractérisé en ce que** ledit corps (242) présente une décharge traversante (249).
